# EUROPÄISCHE PATENTANMELDUNG

(11) **EP 4 620 283 A1**
(43) Veröffentlichungstag der Anmeldung: **24.09.2025**
(21) Anmeldenummer: 24220215.8
(22) Anmeldetag: 16.12.2024
(51) Int. Cl.: A01B 76/00

(54) **LANDWIRTSCHAFTLICHES SYSTEM UND VERFAHREN ZUM BETREIBEN DES SYSTEMS**

(30) Priorität: 05.01.2024 DE 102024100269
(71) Anmelder: Lemken GmbH & Co KG, 46519 Alpen (DE)
(72) Erfinder: Röttgermann, Sebastian, 47608 Geldern (DE); Haverkamp, Stefan, 48346 Ostbevern (DE)

(57) **Zusammenfassung**

Die vorliegende Erfindung betrifft ein landwirtschaftliches System (1) mit einer Arbeitsmaschine (2, 31) mit zumindest einer durch wenigstens einen Aktuator (32) betätigten Geräteschnittstelle (5), an welche ein Anbaugerät (3) zur Bearbeitung eines Feldes (4) adaptiert ist, wobei das System (1) eine Steuereinheit (27) aufweist, die zur Ansteuerung der Geräteschnittstelle (5) ausgeführt und eingerichtet ist, um das Anbaugerät (3) mit Erreichen einer georeferenzierten Bearbeitungsgrenze (7), welche einen zu bearbeitenden Feldbereich (8) begrenzt, wechselweise zwischen einer Arbeitsposition, in der das Anbaugerät (3) abgesenkt ist, und einer Fahrposition, in der das Anbaugerät (3) angehoben ist, zu überführen, wobei an dem Anbaugerät (3) im rückwärtigen Bereich eine einen Erfassungsbereich (24) aufweisende Sensoranordnung (11) vorgesehen ist, die mindestens zur Detektion eines durch das Anbaugerät (3) hervorgerufenen Arbeitsergebnisses eingerichtet ist, wobei der Erfassungsbereich (24) in der abgesenkten Arbeitsposition des Anbaugerätes (3) zur Detektion des Arbeitsergebnisses in einem sich im Wesentlichen unmittelbar an den rückwärtigen Bereich des Anbaugerätes (3) anschließenden Auswertebereich (23) positioniert ist und in der angehobenen Fahrposition des Anbaugerätes (3) zur Detektion eines hinter dem Anbaugerät (3) liegenden Überwachungsbereiches (26) positioniert ist.

## Beschreibung

Die vorliegende Erfindung betrifft ein landwirtschaftliches System gemäß dem Oberbegriff des Anspruches 1. Weiterhin ist ein Verfahren zum Betreiben eines landwirtschaftlichen Systems gemäß dem Oberbegriff des Anspruches 15 Gegenstand der Erfindung.

Aus der EP 4 133 928 A1 ist ein System gemäß dem Oberbegriff des Anspruches 1 bekannt. Dort ist eine als Traktor ausgeführte Arbeitsmaschine mit einem an einer Geräteschnittstelle adaptierten, als Grubber ausgeführten Anbaugerät beschrieben. An dem Traktor ist ein vorausschauendes Sensormittel angeordnet, welches zur optischen Erfassung der vor dem Traktor liegenden Feldoberfläche dient, und am Anbaugerät ist ein zurückschauendes Sensormittel angeordnete, welches der optischen Erfassung hinter dem Anbaugerät dient. Die von dem Sensormittel generierten Daten werden einer Datenverarbeitungseinheit des Traktors zur Auswertung zugeführt. Neben den Sensormitteln an Traktor und Anbaugerät sind weitere Sensormittel zur Verbesserung der Datenqualität an der Unterseite des Traktors vorgesehen, welche auf die darunterliegende Feldoberfläche gerichtet sind. Bei der Bearbeitung eines Feldes ist mit Erreichen einer georeferenzierten Bearbeitungsgrenze, welche einen zu bearbeitenden Feldbereich begrenzt, beispielsweise von einem Vorgewendebereich trennt, ist das Anbaugerät wechselweise anzuheben, um es in eine Fahrposition zu überführen, und abzusenken, um es in eine Arbeitsposition zu bringen.

Im Vorgewendebereich ist oftmals ein Rückwärtsfahren des landwirtschaftlichen Systems erforderlich, um korrekt in eine nachfolgende Fahrspur des zu bearbeitenden Feldbereiches einzufahren. Hierzu kommt entweder eine Rückfahrkamera an der Arbeitsmaschine zum Einsatz oder der Fahrer der Arbeitsmaschine muss selbst den rückwärtigen Bereich überwachen, um mögliche Kollisionen mit Lebewesen oder Hindernissen zu vermeiden.

Ausgehend vom vorstehend genannten Stand der Technik liegt der Erfindung die Aufgabe zugrunde, ein landwirtschaftliches System sowie ein Verfahren zum Betreiben eines landwirtschaftlichen Systems weiterzubilden, welche sich durch eine flexiblere Nutzung der Sensoranordnung des Anbaugerätes auszeichnen.

Die vorstehend genannte Aufgabe wird durch ein landwirtschaftliches System mit den Merkmalen des Anspruches 1 gelöst. Weiterhin wird die Aufgabe durch ein Verfahren zum Betreiben eines landwirtschaftlichen Systems mit den Merkmalen des nebengeordneten Anspruches 15 gelöst. Vorteilhafte Weiterbildungen sind Gegenstand der Unteransprüche.

Gemäß dem Anspruch 1 wird ein landwirtschaftliches System vorgeschlagen, mit einer Arbeitsmaschine mit zumindest einer durch wenigstens einen Aktuator betätigten Geräteschnittstelle, an welche ein Anbaugerät zur Bearbeitung eines Feldes adaptiert ist, . Das System weist eine Steuereinheit auf, die zur Ansteuerung der Geräteschnittstelle ausgeführt und eingerichtet ist, um das Anbaugerät mit Erreichen einer georeferenzierten Bearbeitungsgrenze, welche einen zu bearbeitenden Feldbereich begrenzt, wechselweise zwischen einer Arbeitsposition, in der das Anbaugerät abgesenkt ist, und einer Fahrposition, in der das Anbaugerät angehoben ist, zu überführen, wobei an dem Anbaugerät im rückwärtigen Bereich eine Sensoranordnung vorgesehen ist, die einen Erfassungsbereich aufweist und die mindestens zur Detektion eines durch das Anbaugerät hervorgerufenen Arbeitsergebnisses eingerichtet ist. Erfindungsgemäß ist vorgesehen, dass der Erfassungsbereich in der abgesenkten Arbeitsposition des Anbaugerätes zur Detektion des Arbeitsergebnisses in einem sich im Wesentlichen unmittelbar an den rückwärtigen Bereich des Anbaugerätes anschließenden Auswertebereich positioniert ist und in der angehobenen Fahrposition des Anbaugerätes zur Detektion eines hinter dem Anbaugerät liegenden Überwachungsbereiches positioniert ist.

Die im rückwärtigen Bereich des Anbaugerätes angeordnete Sensoranordnung kann somit in der abgesenkten Arbeitsposition des Anbaugerätes bei der Beurteilung der Bearbeitungsqualität des Feldes eingesetzt und in der angehobenen Fahrposition des Anbaugerätes wie eine Rückfahrkamera verwendet werden.

Insbesondere kann die Sensoranordnung mittels einer Haltevorrichtung am Anbaugerät angeordnet sein. Bevorzugt kann die Haltevorrichtung einen Tragarm umfassen, welcher zumindest abschnittsweise in vertikaler und horizontaler Richtung rückwärtig über den rückwärtigen Bereich des Anbaugerätes hinausragt. Insbesondere bei der Beurteilung der Bearbeitungsqualität weist die Sensoranordnung dadurch einen räumlichen Abstand zum zu detektierenden Feldboden sowie zu dem Anbaugerät selbst auf. Bevorzugt kann der Tragarm teleskopierbar ausgeführt sein.

Bevorzugt kann die Steuereinheit dazu eingerichtet sein, Betriebsparameter der Sensoranordnung und/oder der Haltevorrichtung in Abhängigkeit von der jeweiligen Einnahme der Arbeitsposition oder der Fahrposition des Anbaugerätes anzupassen. Durch das Anheben beim Überführen des Anbaugerätes von der Arbeitsposition in die Fahrposition ändert sich zumindest der Bildwinkel der Sensoranordnung als ein Betriebsparameter. In Abhängigkeit von der angestrebten Breite und/oder der Ausdehnung in Fahrrichtung des Überwachungsbereiches bei einer Rückwärtsfahrt innerhalb oder außerhalb des zu bearbeitenden Feldbereiches kann eine Anpassung des Bildwinkels der Sensoranordnung erforderlich sein.

Insbesondere können die Haltevorrichtung und/oder die Sensoranordnung durch eine Aktuatorik gegenüber einem Rahmenabschnitt des Anbaugerätes positionsveränderbar sein. Vorzugsweise kann ein Neigungswinkel, den die Haltevorrichtung mit dem Rahmenabschnitt des Anbaugerätes und/oder den die Sensoranordnung gegenüber der Haltevorrichtung einnimmt, durch die Aktuatorik anpassbar sein. Dies ist vorteilhaft, um den Abstand des Überwachungsbereiches zum rückwärtigen Bereich des Anbaugerätes gegenüber dem der Erstreckung des Auswertebereiches in Längsrichtung des Systems anzupassen. Dadurch lassen sich Hindernisse in einem räumlichen Abstand erfassen, welcher ausreichend Zeit für die Analyse und eine Reaktion hierauf lässt.

Gemäß einem weiteren Aspekt kann die Haltevorrichtung lösbar an dem Rahmenabschnitt befestigbar sein. Dies ermöglicht einen Austausch bzw. eine Nachrüstung an dem Anbaugerät. Ebenso ist dadurch ein Einsatz der Sensoranordnung an einem Anbaugerät denkbar, welches über keine derartige Sensoranordnung verfügt.

Insbesondere kann der Überwachungsbereich einen Mindestabstand zum rückwärtigen Bereich des Anbaugerätes aufweisen, welcher der oder mindestens teilweise der Erstreckung des Auswertebereiches in Längsrichtung des Systems entspricht.

Gemäß einer Weiterbildung kann die Sensoranordnung zumindest einen, insbesondere optischen, Sensor umfassen.

Dabei kann der zumindest eine Sensor als Radar-Sensor, Lidar-Sensor, Kamera, Spektralkamera oder Tiefenbildkamera ausgeführt sein.

Gemäß einer Weiterbildung kann der Steuereinheit eine Bildverarbeitungseinheit zugeordnet sein, welche die von der Sensoranordnung generierten Signale und/oder Bilddaten auswertet und das Ergebnis der Auswertung an die Steuereinheit zur Generierung von Steuerbefehlen in Abhängigkeit vom Ergebnis der Analyse übermittelt.

Dabei kann die Steuereinheit dazu eingerichtet sein, die Bildverarbeitungseinheit in Abhängigkeit von der jeweiligen Einnahme der Arbeitsposition oder der Fahrposition anzusteuern, um zwischen zumindest zwei unterschiedlichen Auswertealgorithmen auszuwählen. Hierdurch wird den beiden unterschiedlichen Anwendungsfällen der Sensoranordnung Rechnung getragen. Der Einsatz der Sensoranordnung bei der Beurteilung der Bearbeitungsqualität erfordert einen anderen Auswertealgorithmus als die Verwendung der Sensoranordnung als Rückfahrkamera.

Insbesondere kann die Sensoranordnung in abgesenkter Arbeitsposition zur Detektion von das Arbeitsergebnis bestimmenden Parametern, insbesondere Bodenebenheit, Bodenrauheit und/oder Bedeckungsgrad, im Auswertebereich der Sensoranordnung eingerichtet sein und in angehobener Fahrposition zur Detektion von Umfeldparametern, insbesondere einem Vorhandensein von Lebewesen und/oder Hindernissen im Überwachungsbereich der Sensoranordnung. Der Auswertebereich und der Überwachungsbereich können sich hinsichtlich ihrer Lage und/oder ihrer räumlichen Ausdehnung unterscheiden.

Hierzu kann die Steuereinheit dazu ausgeführt sein, in Abhängigkeit von den detektierten Umfeldparametern zumindest ein Warnsignal zu generieren und/oder das System in einen sicheren Zustand zu versetzen. Bevorzugt wird ein optisches und/oder akustisches Warnsignal generiert, welches bzw. welche durch eine entsprechende Einrichtung der Arbeitsmaschine und/oder einer entfernten Überwachungseinrichtung, beispielsweise auf einer Hofstelle, ausgegeben werden kann.

Insbesondere kann die Arbeitsmaschine für einen vollautomatisierten oder autonomen Betrieb ausgeführt und eingerichtet sein. Hierbei kann die Steuereinheit des landwirtschaftlichen Systems mit der vollautomatisierten oder autonomen Arbeitsmaschine in Abhängigkeit von den detektierten Umfeldparametern eigenständig einen Entscheidungsprozess einleiten, um eine an die detektierte Situation angepasste Reaktion selbststätig zu bestimmen und auszuführen.

Gemäß einer bevorzugten Weiterbildung kann die Steuereinheit dazu eingerichtet sein, die jeweilige Einnahme der abgesenkten Arbeitsposition oder der angehobenen Fahrposition des Anbaugerätes in Abhängigkeit von einer Ansteuerung der Aktuatoren der Geräteschnittstelle und/oder aufgrund empfangener Signale eines Sensorsystems zur Positions- und Orientierungsbestimmung zu bestimmen. Dies ist besonders vorteilhaft, wenn die Arbeitsmaschine voll automatisiert oder autonom betrieben wird. Bei einem Wechsel von der Arbeitsposition in die Fahrposition des Anbaugerätes und umgekehrt kann die Steuereinheit automatisch zwischen den zumindest zwei unterschiedlichen Auswertealgorithmen umschalten.

Bevorzugt kann an der Arbeitsmaschine und/oder dem Anbaugerät zumindest eine Sensoreinheit angeordnet sein, welche zur Überwachung von Arbeitsparametern des Anbaugerätes eingerichtet ist. Die zumindest eine Sensoreinheit kann zumindest einen berührungslos arbeitenden Sensor umfassen, mit welchem Arbeitsparameter des Anbaugerätes erfassbar sind. Die zumindest eine Sensoreinheit kann dazu zumindest einen optischen und/oder akustischen Sensor umfassen.

Insbesondere können zu überwachende Arbeitsparameter das Auftreten von Verstopfungen im Arbeitsbereich des Anbaugerätes und/oder Zustandsdaten von Bearbeitungswerkzeugen, insbesondere Verschleiß an und/oder der Verlust von einzelnen Bearbeitungswerkzeugen, sein.

Des Weiteren kann zumindest eine Sensoreinheit den Bearbeitungswerkzeugen des Anbaugerätes vorgeordnet am Rahmenabschnitt des Anbaugerätes angeordnet sein. Die vorgeordnete Anordnung der zumindest einen Sensoreinheit ermöglicht es, den Feldboden vor dessen Bearbeitung durch das Anbaugerät zu detektieren. Die Signale dieser Sendeeinheit werden der Steuereinheit zur Auswertung zugeführt und können mit den von der Sensoranordnung bereitgestellten Signalen im rückwärtigen Bereich des Anbaugerätes verglichen werden, um Aussagen über die Arbeitsqualität treffen zu können.

Die eingangs genannte Aufgabe wird weiterhin durch ein Verfahren zum Betreiben eines landwirtschaftlichen Systems mit den Merkmalen des Anspruches 15 gelöst.

Gemäß dem Anspruch 15 wird ein Verfahren zum Betreiben eines landwirtschaftlichen Systems mit einer Arbeitsmaschine mit zumindest einer durch wenigstens einen Aktuator betätigten Geräteschnittstelle, an welche ein Anbaugerät zur Bearbeitung eines Feldes adaptiert wird, vorgeschlagen, wobei das System eine Steuereinheit aufweist, durch welche die Geräteschnittstelle angesteuert wird, um das Anbaugerät mit Erreichen einer georeferenzierten Bearbeitungsgrenze, welche einen zu bearbeitenden Feldbereich begrenzt, wechselweise zwischen einer Arbeitsposition, in der das Anbaugerät abgesenkt ist, und einer Fahrposition, in der das Anbaugerät angehoben ist, zu überführen, wobei zumindest an dem Anbaugerät im rückwärtigen Bereich eine einen Erfassungsbereich aufweisende Sensoranordnung vorgesehen ist, welche mindestens ein durch das Anbaugerät hervorgerufenes Arbeitsergebnis detektiert. Erfindungsgemäß ist vorgesehen, dass der Erfassungsbereich in der abgesenkten Arbeitsposition des Anbaugerätes zur Detektion des Arbeitsergebnisses in einem sich im Wesentlichen unmittelbar an den rückwärtigen Bereich des Anbaugerätes anschließenden Auswertebereich positioniert wird und in der Fahrposition durch Anheben des Anbaugerätes zur Detektion eines hinter dem Anbaugerät liegenden Überwachungsbereiches positioniert wird.

Vorteilhaft ist es, wenn der Überwachungsbereich mit einem Mindestabstand zum rückwärtigen Bereich des Anbaugerätes eingestellt wird, welcher der oder mindestens teilweise der Erstreckung des Auswertebereiches in Längsrichtung des Systems entspricht.

So kann mit Passieren der georeferenzierten Bearbeitungsgrenze das Anbaugerät aus seiner Fahrposition in seine Arbeitsposition überführt werden. Mit dem Überführen des Anbaugerätes in die Arbeitsposition kann einer der Auswertealgorithmen zur Überwachung des Arbeitsergebnisses, insbesondere zeitgleich, gestartet werden. Mit erneutem Passieren der georeferenzierten Bearbeitungsgrenze kann das Anbaugerät aus seiner Arbeitsposition in seine Fahrposition überführt werden. Mit dem Überführen des Anbaugerätes in die Fahrposition kann einer der Auswertealgorithmen gestartet werden, welcher bei der Verwendung der Sensoranordnung als Rückfahrkamera zur Anwendung kommt. Dieser Vorgang kann sich für die Dauer der Feldbearbeitung zyklisch wiederholen.

Auf die erfindungsgemäßen Vorteile des landwirtschaftlichen Systems darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch ein landwirtschaftliches System zur Bearbeitung eines Feldes in Arbeitsposition;
- Fig. 2: schematisch und exemplarisch das System gemäß Fig. 1 in einer Fahrposition;
- Fig. 3: schematisch und exemplarisch das landwirtschaftliche System aus einer autonomen Arbeitsmaschine und einem an einer Geräteschnittstelle angeordneten Anbaugerät; und
- Fig. 4: exemplarisch einen Ablauf des erfindungsgemäßen Verfahrens zum Betreiben des landwirtschaftlichen Systems.

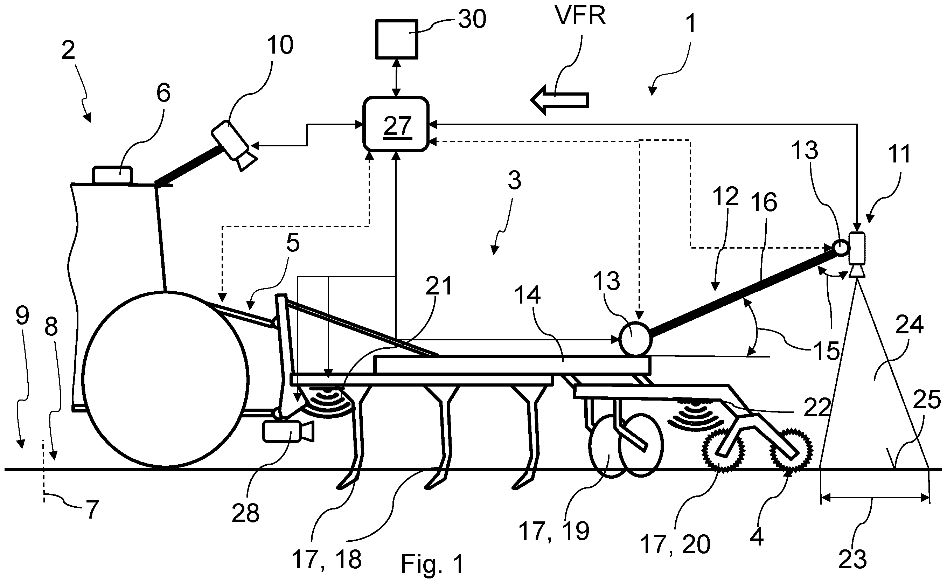

In Fig. 1 ist schematisch und exemplarisch ein landwirtschaftliches System 1 zur Bearbeitung eines Feldes 4 in Arbeitsposition dargestellt. Das landwirtschaftliche System 1 umfasst eine Arbeitsmaschine 2 sowie ein Anbaugerät 3 zur Bearbeitung des Feldes 4. Die Arbeitsmaschine 2 ist mit zumindest einer durch wenigstens einen Aktuator 32 betätigten Geräteschnittstelle 5 ausgeführt.

Die Geräteschnittstelle 5 kann, wie in den Fig. 1 bis 3 dargestellt, Teil der Arbeitsmaschine 2 sein. Die Geräteschnittstelle 5 kann alternativ oder zusätzlich Bestandteil des Anbaugerätes 3 sein.

Der wenigstens eine Aktuator 32 kann insbesondere als hydraulischer, pneumatischer oder elektromechanischer Linearaktor ausgeführt sein. Alternative Ausführungen des wenigstens einen Aktuators 32 sind denkbar.

Die Arbeitsmaschine 2 weist ein Sensorsystem zur Positions- und Orientierungsbestimmung 6 auf, welcher unter anderem dazu dient, das Erreichen bzw. das Passieren einer georeferenzierten Bearbeitungsgrenze 7, welche einen zu bearbeitenden Feldbereich 8 begrenzt, beispielsweise von einem Vorgewendebereich 9 abtrennt, durch Auswertung der bereitgestellten Positionsortungssignale zu bestimmen. Weiterhin kann an der Arbeitsmaschine 2 zumindest eine Sensoreinheit 10 angeordnet sein, welche zur Überwachung von Arbeitsparametern des Anbaugerätes 3 eingerichtet ist. Im dargestellten Ausführungsbeispiel ist die Sensoreinheit 10 als eine Kamera ausgeführt, deren Erfassungsbereich auf das Anbaugerät 3 ausgerichtet ist.

An dem Anbaugerät 3 ist im rückwärtigen Bereich eine Sensoranordnung 11 vorgesehen, die zur Detektion eines durch das Anbaugerät 3 hervorgerufenen Arbeitsergebnisses eingerichtet ist. Die Sensoranordnung 11 ist mittels einer Haltevorrichtung 12 am Anbaugerät angeordnet.

Die Haltevorrichtung 12 und/oder die daran angeordnete Sensoranordnung 11 kann durch zumindest eine Aktuatorik 13 gegenüber einem Rahmenabschnitt 14 des Anbaugerätes 3 positionsveränderbar sein. Vorzugsweise kann ein Neigungswinkel 15, den die Haltevorrichtung 12 mit dem Rahmenabschnitt 14 des Anbaugerätes 3 und/oder den die Sensoranordnung 11 gegenüber der Haltevorrichtung 12 einnimmt, durch die zumindest eine Aktuatorik 13 anpassbar sein. Bevorzugt sind die Sensoranordnung 11, die Haltevorrichtung 12 sowie die zumindest eine Aktuatorik 13 lösbar am Rahmenabschnitt 14 des Anbaugerätes 3 befestigt.

Die an der Haltevorrichtung 12 im rückwärtigen Bereich des Anbaugerätes 3 angeordnete Sensoranordnung 11 umfasst zumindest einen insbesondere optischen, Sensor. Bevorzugt ist der zumindest eine Sensor als Radar-Sensor, Lidar-Sensor, Kamera, Spektralkamera oder Tiefenbildkamera ausgeführt.

Im dargestellten Ausführungsbeispiel ist das Anbaugerät 3 zur Bodenbearbeitung ausgeführt und eingerichtet, hier und vorzugsweise als Grubber. An dem Rahmenabschnitt 14 sind, in Längsrichtung des Anbaugerätes 3 gesehen, in mehreren hintereinander angeordneten Reihen unterschiedliche Bearbeitungswerkzeuge 17 angeordnet, die der Bodenbearbeitung dienen. Im vorderen Bereich sind mehrere Reihen mit Zinken 18 angeordnet, an die sich eine Reihe mit Hohlscheiben 19 anschließt. Im rückwärtigen Bereich sind Walzen 20 angeordnet, welche, entsprechend ihrer Funktion der Einebnung eines bearbeiteten Bereiches 25 des Feldes 4, die letzte Reihe mit Bearbeitungswerkzeugen 17 bilden.

Die Haltevorrichtung 12 umfasst einen Tragarm 16, welcher zumindest abschnittsweise in vertikaler und horizontaler Richtung rückwärtig über den rückwärtigen Bereich des Anbaugerätes 3 hinausragt. Die Länge des Tragarmes 16 ist derart gewählt, dass die daran angeordnete Sensoranordnung 11 stets über die letzte Reihe mit Bearbeitungswerkzeugen 17, hier den Walzen 20, hinausragt. Insbesondere bei der Beurteilung der Bearbeitungsqualität, hier und vorzugsweise der Bodenbearbeitungsqualität, weist die Sensoranordnung 11 dadurch einen räumlichen Abstand zum zu detektierenden Feldboden sowie zu dem Anbaugerät 3 selbst auf.

Weiterhin sind berührungslos arbeitende Abstandssensoren 21, 22 auf der Unterseite des Rahmenabschnitts 14 am Anbaugerät angeordnet. Die Abstandssensoren 21, 22 sind zueinander beabstandet angeordnet. So kann ein Abstandssensor 21 auf Höhe der Zinken 18 und der weitere Abstandssensor 22 kann zwischen der Reihe mit Hohlscheiben 19 und der Reihe mit Walzen 20 angeordnet sein. Mittels der zueinander beabstandeten Anordnung der Abstandssensoren 21, 22 lässt sich auf die Ausrichtung des Anbaugerätes 3, insbesondere dessen Parallelität, gegenüber dem Feldboden schließen. Des Weiteren kann mittels der Abstandssensoren 21, 22 die Tiefenführung der Bearbeitungswerkzeuge 17 überwacht und adaptiert werden.

Des Weiteren kann ein optische Sensoreinheit 28 im Bereich vor der ersten Reihe mit Bearbeitungswerkzeugen 17 angeordnet sein. Mittels der optischen Sensoreinheit 28 kann Verschleiß an den Bearbeitungswerkzeugen 17 und/oder das Fehlen einzelner Bearbeitungswerkzeuge 17 detektiert werden.

Das System 1 weist eine Steuereinheit 27 auf. Die Steuereinheit 27 kann der Arbeitsmaschine 2 und/oder dem Anbaugerät 3 zugeordnet sein. Die Steuereinheit 27 wertet empfangene Daten aus und generiert in Abhängigkeit von der Auswertung der Daten Steuersignale. Die Steuereinheit 27 steht dabei mit dem wenigstens einen Aktuator 32 der Geräteschnittstelle 5 sowie der Sensoranordnung 11 signal- und datentechnisch durch ein, insbesondere drahtgebundenes und/oder drahtloses, Bussystem in Verbindung, um ein Sensorsignal und/oder insbesondere Bilddaten zur Auswertung zu empfangen und Steuersignale zu versenden.

Die Steuereinheit 27 kann des Weiteren mit der Sensoreinheit 10, den Abstandssensoren 21, 22, die Aktuatorik 13 zur Neigungswinkelverstellung an der Haltevorrichtung 12 und/oder der optischen Sensoreinheit 28 signal- und datentechnisch in Verbindung stehen, um ein Sensorsignal und/oder insbesondere Bilddaten zur Auswertung zu empfangen und Steuersignale zu versenden.

Das landwirtschaftliche System 1 befindet sich in seiner Arbeitsposition und bewegt sich in Vorwärtsfahrtrichtung VFR auf die Bearbeitungsgrenze 7 zu. Mittels der Haltevorrichtung 12 ist die Sensoranordnung 11 in der abgesenkten Arbeitsposition des Anbaugerätes 3 zur Detektion eines Arbeitsergebnisses in einem sich im Wesentlichen unmittelbar an den rückwärtigen Bereich des Anbaugerätes 3 anschließenden Auswertebereich 23 positioniert. Die Sensoranordnung 11 weist einen Erfassungsbereich 24 auf, der den Auswertebereich 23 räumlich begrenzt.

Die Bearbeitungsgrenze 7 trennt wie weiter oben bereits ausgeführt, im dargestellten Beispiel den zu bearbeitenden Feldbereich 8 vom Vorgewendebereich 9. Die Sensoranordnung 11 erfasst in der abgesenkten Arbeitsposition des Anbaugerätes 3 im Auswertebereich 23 befindlichen bearbeiteten Boden 25. Hierdurch kann die Sensoranordnung 11 das Arbeitsergebnis detektieren, welches mit den eingestellten Betriebsparametern des landwirtschaftlichen Systems 1 erreicht wurde. Durch die Auswertung der von der Sensoranordnung 11 bereitgestellten Signale kann auf die erzielte Bearbeitungsqualität geschlossen werden. Die Sensoranordnung 11 ist dazu eingerichtet, in abgesenkter Arbeitsposition das Arbeitsergebnis bestimmende Parameter, insbesondere Bodenebenheit, Bodenrauheit und/oder Bedeckungsgrad, zu detektieren.

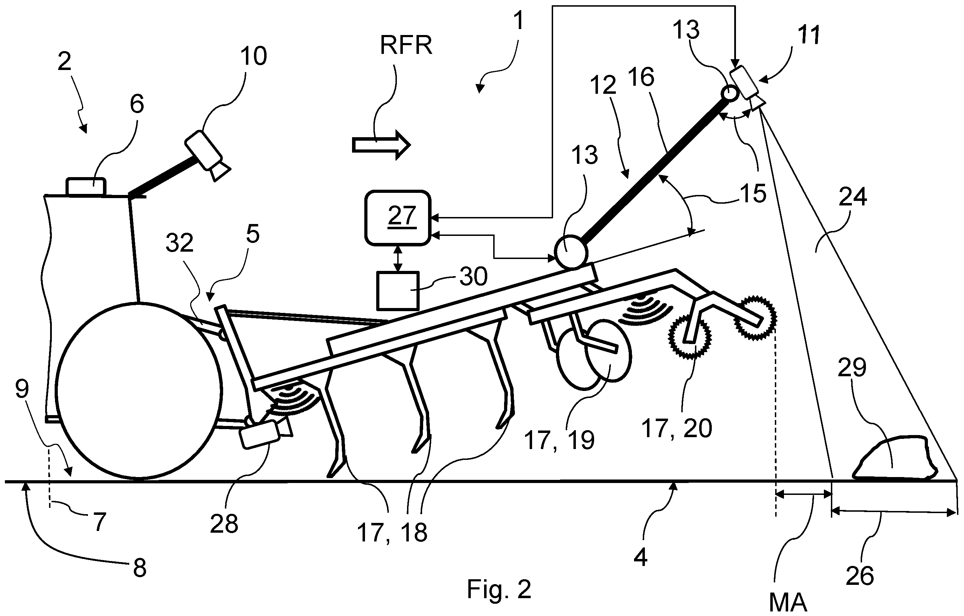

Die Darstellung in Fig. 2 zeigt schematisch und exemplarisch das System gemäß Fig. 1 in einer Fahrposition. In der Fahrposition ist das Anbaugerät 3 durch die Ansteuerung der Geräteschnittstelle 5 angehoben. Das System 1 befindet sich im Vorgewendebereich 9 und bewegt sich in Rückwärtsfahrtrichtung RFR. In der angehobenen Fahrposition des Anbaugerätes 3 ist die Sensoranordnung 11 zur Detektion des hinter dem Anbaugerät 3 liegenden Überwachungsbereiches 26 positioniert, der von der Sensoranordnung 11 überwacht werden soll.

Die Positionierung der Sensoranordnung 11 zur Detektion des hinter dem Anbaugerät 3 liegenden Überwachungsbereiches 26 wird bevorzugt durch das Anheben oder Ausheben des Anbaugerätes 3 eingenommen. Korrekturen der Position der Sensoranordnung 11 lassen sich durch die Anpassung des Neigungswinkels 15, den die Haltevorrichtung 12 mit dem Rahmenabschnitt 14 des Anbaugerätes 3 und/oder den die Sensoranordnung 11 gegenüber der Haltevorrichtung 12 einnimmt, erreichen. Hierzu kann die Steuereinheit 27 die zumindest eine Aktuatorik 13 ansteuern.

Der Überwachungsbereich 26 weist einen Mindestabstand MA zum rückwärtigen Bereich des Anbaugerätes 3 auf, welcher mindestens der Erstreckung des Auswertebereiches 23 in Längsrichtung des Systems 1 entspricht. Der Mindestabstand MA des Überwachungsbereiches 26 ist einstellbar. Bevorzugt lässt sich dieser Mindestabstand insbesondere durch die Anpassung eines oder beider Neigungswinkel 15 erreichen. Zusätzlich oder alternativ kann der Tragarm 16 teleskopierbar ausgeführt sein.

Beispielhaft ist als Umfeldparameter ein Hindernis 29 in Form eines Steins dargestellt, welches bei der Rückwärtsfahrt durch die Sensoranordnung 11 detektiert wird und von der Steuereinheit 27 bei der Auswertung der Bilddaten als solches klassifiziert wird. Ein Bediener des Systems 1 kann entsprechend auf das Vorhandensein des Hindernisses 29 reagieren. Hierzu kann die Steuereinheit 27 zumindest ein Warnsignal generieren, um den Bediener auf das Vorhandensein des Hindernisses 29 hinzuweisen. So kann der Bediener das System 1 anhalten, um das Hindernis 29 zu beseitigen. Alternativ kann das Hindernis 29 auch umfahren werden. Hierdurch lässt sich eine Beschädigung eines der Bearbeitungswerkzeuge 17 oder des Anbaugerätes 3 aufgrund einer Kollision mit dem Hindernis 29 vermeiden. Ein weiterer Aspekt ist, dass bei einer Klassifizierung des detektierten Umfeldparameters als Lebewesen, ein Mensch oder ein Tier, das System 1 durch die Steuereinheit 27 unmittelbar angehalten wird.

Bevorzugt ist die Steuereinheit 27 dazu ausgeführt, in Abhängigkeit von den detektierten Umfeldparametern das System 1 automatisch in einen sicheren Zustand zu versetzen oder eine Umfahrung des detektierten Umfeldparameters zu veranlassen, wenn dies gefahrlos räumlich möglich ist.

Bevorzugt ist die Steuereinheit 27 dazu eingerichtet, Betriebsparameter der Sensoranordnung 11 und/oder der Haltevorrichtung 12 in Abhängigkeit von der jeweiligen Einnahme der Arbeitsposition oder der Fahrposition des Anbaugerätes 3 anzupassen. Durch das Anheben beim Überführen des Anbaugerätes 3 von der Arbeitsposition in die Fahrposition ändert sich zumindest der Bildwinkel der Sensoranordnung 11 als ein Betriebsparameter. In Abhängigkeit von der angestrebten Breite und/oder der Ausdehnung des Überwachungsbereiches 26 in Fahrtrichtung bei einer Rückwärtsfahrt innerhalb oder außerhalb des zu bearbeitenden Feldbereiches 8 kann eine Anpassung des Bildwinkels der Sensoranordnung 11 erforderlich sein.

Der Steuereinheit 27 ist eine Bildverarbeitungseinheit 30 zugeordnet, welche die von der Sensoranordnung 11 generierten Signale oder Bilddaten mittels geeigneter Bildverarbeitungsalgorithmen auswertet und das Ergebnis der Auswertung an die Steuereinheit 27 zur Generierung von Steuerbefehlen in Abhängigkeit vom Ergebnis der Analyse übermittelt.

Insbesondere kann die Steuereinheit 27 dazu eingerichtet sein, die Bildverarbeitungseinheit 30 in Abhängigkeit von der jeweiligen Einnahme der Arbeitsposition oder der Fahrposition anzusteuern, um zwischen zumindest zwei unterschiedlichen Auswertealgorithmen auszuwählen. Hierdurch wird den beiden unterschiedlichen Anwendungsfällen der Sensoranordnung 11 Rechnung getragen. Der Einsatz der Sensoranordnung 11 bei der Beurteilung der Bearbeitungsqualität in der Arbeitsposition des Anbaugerätes 3 erfordert einen anderen Auswertealgorithmus als die Verwendung der Sensoranordnung 11 als Rückfahrkamera in der Fahrposition des Anbaugerätes 3.

Die Steuereinheit 27 ist dazu eingerichtet, die jeweilige Einnahme der Arbeitsposition oder der Fahrposition des Anbaugerätes 3 in Abhängigkeit von einer Ansteuerung des wenigstens einen Aktuators 32 der Geräteschnittstelle 5 und/oder aufgrund empfangener Signale des Sensorsystems zur Positions- und Orientierungsbestimmung 6 zu bestimmen.

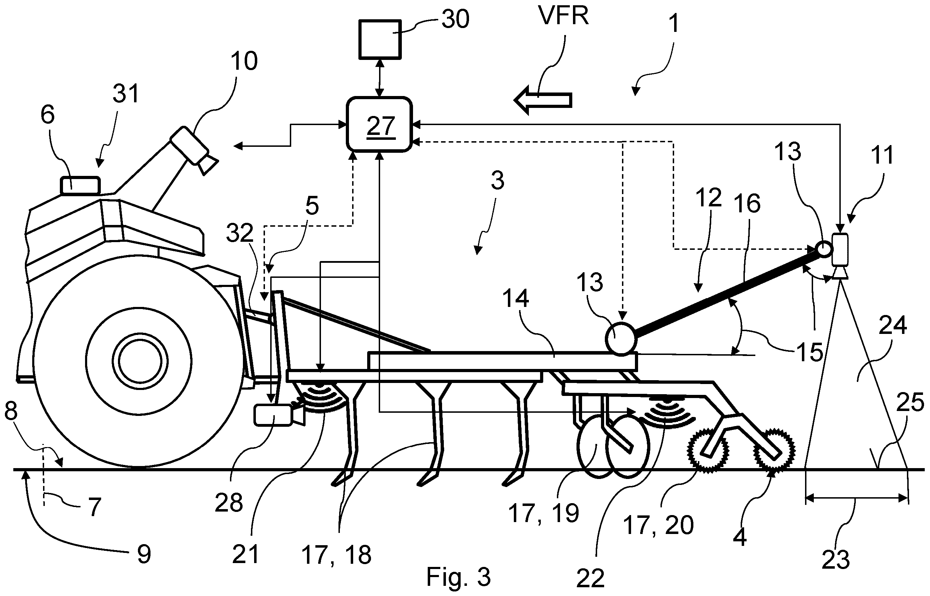

In Fig. 3 ist schematisch und exemplarisch das landwirtschaftliche System 1, bestehend aus einer autonomen Arbeitsmaschine 31 und dem an der Geräteschnittstelle 5 angeordneten Anbaugerät 3, dargestellt. Die Arbeitsmaschine 31 ist im Unterschied zur als Traktor ausgeführten Arbeitsmaschine 2 für einen vollautomatisierten oder autonomen Betrieb ausgeführt und eingerichtet. Die Steuereinheit 27 des landwirtschaftlichen Systems 1 mit der vollautomatisierten oder autonomen Arbeitsmaschine 31 leitet in Abhängigkeit von den detektierten Umfeldparametern eigenständig einen Entscheidungsprozess ein, um eine an die detektierte Situation angepasste Reaktion zu bestimmen und auszuführen.

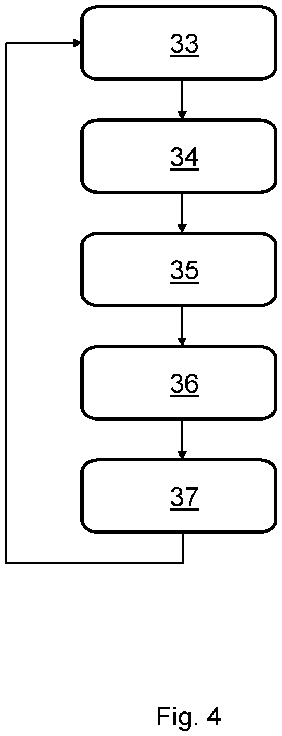

In Fig. 4 ist exemplarisch ein Ablauf des erfindungsgemäßen Verfahrens zum Betreiben des landwirtschaftlichen Systems 1 dargestellt.

Mit dem Überführen des Anbaugerätes in die Fahrposition kann einer der Auswertealgorithmen gestartet werden, welcher bei der Verwendung der Sensoranordnung als Rückfahrkamera zur Anwendung kommt. Dieser Vorgang kann sich für die Dauer der Feldbearbeitung wiederholen.

Im Schritt 33 wird die georeferenzierte Bearbeitungsgrenze 7 erreicht oder passiert, die den Vorgewendebereich 9 und den zu bearbeitenden Feldbereich 8 voneinander trennt. Das Passieren der Bearbeitungsgrenze 7 wird mittels des Sensorsystems zur Positions- und Orientierungsbestimmung 6 detektiert.

Die Steuereinheit 27 steuert im Schritt 34 den wenigstens einen Aktuator 32 der Geräteschnittstelle 5 an, um das Anbaugerät 3 mit seinen Bearbeitungswerkzeugen 17 abzusenken, d.h. aus der Fahrposition in die Arbeitsposition zu überführen. Mit dem Erreichen oder Passieren der georeferenzierten Bearbeitungsgrenze 7 wird das Anbaugerät 3 aus seiner Fahrposition in seine Arbeitsposition überführt.

Mit dem Überführen des Anbaugerätes 3 in die Arbeitsposition wird, insbesondere zeitgleich, einer der Auswertealgorithmen zur Überwachung des Arbeitsergebnisses gestartet.

Im Schritt 35 wird einer der in der Steuereinheit 27 hinterlegten Auswertealgorithmen gestartet, welcher beim Einsatz der Sensoranordnung 11 bei der Beurteilung der Bodenbearbeitungsqualität in der Arbeitsposition des Anbaugerätes 3 zur Anwendung kommt. Mittels des Auswertealgorithmus lassen sich zudem Störgrößen am Anbaugerät 3 bestimmen. Störgrößen können das Auftreten von Verstopfungen im Arbeitsbereich des Anbaugerätes 3 und/oder Zustandsdaten von Bearbeitungswerkzeugen 17, insbesondere Verschleiß an und/oder der Verlust von einzelnen Bearbeitungswerkzeugen 17, sein.

Mit erneutem Erreichen oder Passieren der georeferenzierten Bearbeitungsgrenze wird das Anbaugerät 3 aus seiner Arbeitsposition in seine Fahrposition überführt.

Im Schritt 36 wird die georeferenzierte Bearbeitungsgrenze 7 erneut passiert, wobei der bearbeitende Feldbereich 8 durch das System verlassen wird. Das Anbaugerät 3 wird durch Anheben in seine Fahrposition überführt. Die Steuereinheit 27 steuert hierzu im Schritt 36 den wenigstens einen Aktuator 32 der Geräteschnittstelle 5 entsprechend an. Mit dem Überführen des Anbaugerätes 3 in die Fahrposition kann einer der Auswertealgorithmen gestartet werden, welcher bei der Verwendung der Sensoranordnung 11 beispielsweise als Rückfahrkamera zur Anwendung kommt.

Im Schritt 37 wird der zumindest eine weitere in der Steuereinheit 27 hinterlegte Auswertealgorithmus gestartet, welcher bei der Verwendung der Sensoranordnung 11 als Rückfahrkamera in der Fahrposition des Anbaugerätes 3 zur Anwendung kommt.

Die Schritte 35 und 37 können als Auslöser für das Wechseln zwischen den zumindest zwei in der Steuereinheit 27 hinterlegten auszuführenden Auswertealgorithmen dienen. Die beiden Auswertealgorithmen haben dabei Einfluss auf die Analyse durch die Bildverarbeitungseinheit, welche in der Arbeitsposition des Anbaugerätes 3 andere Bilddaten zwecks Analyse verarbeitet als in der Fahrposition.

In den Schritten 34 und 36 kann bereits die Anpassung der Betriebsparameter der Sensoranordnung 11 und/oder der Haltevorrichtung 12 in Abhängigkeit von der jeweiligen Einnahme der Arbeitsposition oder der Fahrposition des Anbaugerätes 3 vorgenommen werden.

Die genannten Verfahrensschritte 33 bis 37 können sich für die Dauer der Feldbearbeitung zyklisch wiederholen.

**Bezugszeichenliste**

| | | | |
|---|---|---|---|
| 1 | Landwirtschaftliches System | 33 | Schritt |
| 2 | Arbeitsmaschine | 34 | Schritt |
| 3 | Anbaugerät | 35 | Schritt |
| 4 | Feld | 36 | Schritt |
| 5 | Geräteschnittstelle | 37 | Schritt |
| 6 | Sensorsystems zur Positions- und Orientierungsbestimmung | MA | Mindestabstand |
| 7 | Bearbeitungsgrenze | VRF | Vorwärtsfahrtrichtung |
| 8 | Feldbereich | RFR | Rückwärtsfahrtrichtung |
| 9 | Vorgewendebereich | | |
| 10 | Sensoreinheit | | |
| 11 | Sensoranordnung | | |
| 12 | Haltevorrichtung | | |
| 13 | , Aktuatorik | | |
| 14 | Rahmenabschnitt | | |
| 15 | Neigungswinkel | | |
| 16 | Tragarm | | |
| 17 | Bearbeitungswerkzeug | | |
| 18 | Zinken | | |
| 19 | Hohlscheibe | | |
| 20 | Walze | | |
| 21 | Abstandssensor | | |
| 22 | Abstandssensor | | |
| 23 | Auswertebereich | | |
| 24 | Erfassungsbereich | | |
| 25 | Bearbeiteter Boden | | |
| 26 | Überwachungsbereich | | |
| 27 | Steuereinheit | | |
| 28 | Sensoreinheit | | |
| 29 | Hindernis | | |
| 30 | Bildverarbeitungseinheit | | |
| 31 | Arbeitsmaschine | | |
| 32 | Aktuator | | |

## Patentansprüche

1. Landwirtschaftliches System (1) mit einer Arbeitsmaschine (2, 31) mit zumindest einer durch wenigstens einen Aktuator (32) betätigten Geräteschnittstelle (5), an welche ein Anbaugerät (3) zur Bearbeitung eines Feldes (4) adaptiert ist, wobei das System (1) eine Steuereinheit (27) aufweist, die zur Ansteuerung der Geräteschnittstelle (5) ausgeführt und eingerichtet ist, um das Anbaugerät (3) mit Erreichen einer georeferenzierten Bearbeitungsgrenze (7), welche einen zu bearbeitenden Feldbereich (8) begrenzt, wechselweise zwischen einer Arbeitsposition, in der das Anbaugerät (3) abgesenkt ist, und einer Fahrposition, in der das Anbaugerät (3) angehoben ist, zu überführen, wobei an dem Anbaugerät (3) im rückwärtigen Bereich eine einen Erfassungsbereich (24) aufweisende Sensoranordnung (11) vorgesehen ist, die mindestens zur Detektion eines durch das Anbaugerät (3) hervorgerufenen Arbeitsergebnisses eingerichtet ist, **dadurch gekennzeichnet, dass** der Erfassungsbereich (24) in der abgesenkten Arbeitsposition des Anbaugerätes (3) zur Detektion des Arbeitsergebnisses in einem sich im Wesentlichen unmittelbar an den rückwärtigen Bereich des Anbaugerätes (3) anschließenden Auswertebereich (23) positioniert ist und in der angehobenen Fahrposition des Anbaugerätes (3) zur Detektion eines hinter dem Anbaugerät (3) liegenden Überwachungsbereiches (26) positioniert ist.

2. Landwirtschaftliches System (1) nach Anspruch 1, **dadurch gekennzeichnet, dass** die Sensoranordnung (11) mittels einer Haltevorrichtung (12) an dem Anbaugerät (3) angeordnet ist, wobei die Haltevorrichtung (12) insbesondere einen Tragarm (16) umfasst, welcher zumindest abschnittsweise in vertikaler und horizontaler Richtung rückwärtig über den rückwärtigen Bereich des Anbaugerätes (3) hinausragt.

3. Landwirtschaftliches System (1) nach Anspruch 1 oder 2, **dadurch gekennzeichnet, dass** die Steuereinheit (27) dazu eingerichtet ist, Betriebsparameter der Sensoranordnung (11) und/oder der Haltevorrichtung (12) in Abhängigkeit von der jeweiligen Einnahme der Arbeitsposition oder der Fahrposition des Anbaugerätes (3) anzupassen.

4. Landwirtschaftliches System (1) nach einem der vorangehenden Ansprüche, **dadurch gekennzeichnet, dass** die Haltevorrichtung (12) und/oder die Sensoranordnung (11) durch eine Aktuatorik (13) gegenüber einem Rahmenabschnitt (14) des Anbaugerätes (3) positionsveränderbar ist oder sind.

5. Landwirtschaftliches System (1) nach einem der vorherigen Ansprüche, **dadurch gekennzeichnet, dass** der Überwachungsbereich (26) einen Mindestabstand (MA) zum rückwärtigen Bereich des Anbaugerätes (3) aufweist, welcher der oder mindestens teilweise der Erstreckung des Auswertebereiches (23) in Längsrichtung des Systems (1) entspricht.

6. Landwirtschaftliches System (1) nach einem der vorherigen Ansprüche, **dadurch gekennzeichnet, dass** die Sensoranordnung (11) zumindest einen, insbesondere optischen, Sensor umfasst, insbesondere dass der zumindest eine Sensor als Radar-Sensor, Lidar-Sensor, Kamera, Spektralkamera oder Tiefenbildkamera ausgeführt ist.

7. Landwirtschaftliches System (1) nach einem der vorangehenden Ansprüche, **dadurch gekennzeichnet, dass** der Steuereinheit (27) eine Bildverarbeitungseinheit (30) zugeordnet ist, welche die von der Sensoranordnung (11) generierten Signale und/oder Bilddaten auswertet und das Ergebnis der Auswertung an die Steuereinheit (27) zur Generierung von Steuerbefehlen in Abhängigkeit vom Ergebnis der Analyse übermittelt.

8. Landwirtschaftliches System (1) nach Anspruch 7, **dadurch gekennzeichnet, dass** die Steuereinheit (27) dazu eingerichtet ist, in Abhängigkeit von der jeweiligen Einnahme der Arbeitsposition oder der Fahrposition des Anbaugerätes (3) die Bildverarbeitungseinheit (30) anzusteuern, um zwischen zumindest zwei unterschiedlichen Auswertealgorithmen auszuwählen.

9. Landwirtschaftliches System (1) nach einem der vorangehenden Ansprüche, **dadurch gekennzeichnet, dass** die Sensoranordnung (11) in abgesenkter Arbeitsposition zur Detektion von das Arbeitsergebnis bestimmenden Parametern, insbesondere Bodenebenheit, Bodenrauheit und/oder Bedeckungsgrad, im Auswertebereich (23) der Sensoranordnung (3) eingerichtet ist und in angehobener Fahrposition zur Detektion von Umfeldparametern, insbesondere einem Vorhandensein von Lebewesen und/oder Hindernissen im Überwachungsbereich (26) der Sensoranordnung (11).

10. Landwirtschaftliches System (1) nach Anspruch 9, **dadurch gekennzeichnet, dass** die Steuereinheit (27) dazu ausgeführt ist, in Abhängigkeit von den detektierten Umfeldparametern zumindest ein Warnsignal zu generieren und/oder das System (1) in einen sicheren Zustand zu versetzen.

11. Landwirtschaftliches System (1) nach einem der vorangehenden Ansprüche, **dadurch gekennzeichnet, dass** die Arbeitsmaschine (2, 31) für einen vollautomatisierten oder autonomen Betrieb ausgeführt und eingerichtet ist.

12. Landwirtschaftliches System (1) nach einem der vorangehenden Ansprüche, **dadurch gekennzeichnet, dass** die Steuereinheit (27) dazu eingerichtet ist, die jeweilige Einnahme der Arbeitsposition oder der Fahrposition des Anbaugerätes (3) in Abhängigkeit von einer Ansteuerung des wenigstens einen Aktuators (32) der Geräteschnittstelle (5) und/oder aufgrund empfangener Signale eines Sensorsystems zur Positions- und Orientierungsbestimmung (6) zu bestimmen.

13. Landwirtschaftliches System (1) nach einem der vorangehenden Ansprüche, **dadurch gekennzeichnet, dass** an der Arbeitsmaschine (2, 31) und/oder dem Anbaugerät (3) zumindest eine Sensoreinheit (10, 28) angeordnet ist, welche zur Überwachung von Arbeitsparametern des Anbaugerätes (3) eingerichtet ist.

14. Landwirtschaftliches System (1) nach einem der vorangehenden Ansprüche, **dadurch gekennzeichnet, dass** zu überwachende Arbeitsparameter das Auftreten von Verstopfungen im Arbeitsbereich des Anbaugerätes (3) und/oder Zustandsdaten von Bearbeitungswerkzeugen (17), insbesondere Verschleiß und/oder Verlust einzelner Bearbeitungswerkzeuge (17), sind.

15. Verfahren zum Betreiben eines landwirtschaftlichen Systems (1) mit einer Arbeitsmaschine (2, 31) mit zumindest einer durch wenigstens einen Aktuator (32) betätigten Geräteschnittstelle (5), an welche ein Anbaugerät (3) zur Bearbeitung eines Feldes (4) adaptiert wird, wobei das System (1) eine Steuereinheit (27) aufweist, durch welche die Geräteschnittstelle (5) angesteuert wird, um das Anbaugerät (3) mit Erreichen einer georeferenzierten Bearbeitungsgrenze (7), welche einen zu bearbeitenden Feldbereich (8) begrenzt, wechselweise zwischen einer Arbeitsposition, in der das Anbaugerät (3) abgesenkt ist, und einer Fahrposition, in der das Anbaugerät (3) angehoben ist, zu überführen, wobei zumindest an dem Anbaugerät (3) im rückwärtigen Bereich eine einen Erfassungsbereich (24) aufweisende Sensoranordnung (11) vorgesehen ist, welche mindestens ein durch das Anbaugerät (3) hervorgerufenes Arbeitsergebnis detektiert, **dadurch gekennzeichnet, dass** der Erfassungsbereich (24) in der abgesenkten Arbeitsposition des Anbaugerätes (3) zur Detektion des Arbeitsergebnisses in einem sich im Wesentlichen unmittelbar an den rückwärtigen Bereich des Anbaugerätes (3) anschließenden Auswertebereich (23) positioniert wird und in der Fahrposition durch Anheben des Anbaugerätes (3) zur Detektion eines hinter dem Anbaugerät (3) liegenden Überwachungsbereiches (26) positioniert wird.
